(19) Europäisches Patentamt / European Patent Office / Office européen des brevets

(11) **EP 3 835 077 A1**

(12) **EUROPEAN PATENT APPLICATION**
published in accordance with Art. 153(4) EPC

(43) Date of publication:
**16.06.2021 Bulletin 2021/24**

(51) Int Cl.:
**B43K 1/12** *(2006.01)*    **B43K 8/02** *(2006.01)*
**C09D 11/16** *(2014.01)*

(21) Application number: **19846313.5**

(22) Date of filing: **07.08.2019**

(86) International application number:
**PCT/JP2019/031128**

(87) International publication number:
**WO 2020/032104 (13.02.2020 Gazette 2020/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **07.08.2018 JP 2018148799**

(71) Applicant: **MITSUBISHI PENCIL COMPANY, LIMITED**
**Tokyo**
**140-8537 (JP)**

(72) Inventor: **KAMITANI Toshimi**
**Yokohama-shi, Kanagawa 221-8550 (JP)**

(74) Representative: **Vossius & Partner**
**Patentanwälte Rechtsanwälte mbB**
**Siebertstrasse 3**
**81675 München (DE)**

(54) **PEN TIP AND WRITING TOOL PROVIDED WITH SAID PEN TIP**

(57) To provide a pen tip that can enhance its color brilliance and color distinctiveness as well as providing a writing tool having the pen tip. A pen tip A of the present invention is a pen tip equipped with a pen core 20 containing a concealing material, and is characterized in that the pen core has the lightness (L* value) of 80 or higher in the L*a*b* (CIELAB) color system. The writing tool, for example, includes a retention body 10 having a visible part allowing visual recognition of the writing direction and the pen tip A having the above configuration and attached with the retention body 10.

[FIG. 1]

(a)  (b)

EP 3 835 077 A1

## Description

Technical Field

The present invention relates to a pen tip capable of enhancing color brilliance of the pen tip and enhancing color distinctiveness in the pen tip, as well as relating to a writing tool equipped with the same pen tip.

Background Art

Conventionally, pen tips of writing tools, called paint markers, underline markers, and the like, have a wide pen core for enabling wide line drawing, and have been commonly used because of excellency in usability and the visibility of marking.

The pen tip of a writing tool such as a highlight marker is generally formed of a rod-like bundle of synthetic resin fibers or a porous material such as a polymer sintered body, which is endowed with capillarity so that ink supplied from the barrel body, or the main body of the writing tool, is lead to the pen tip to enable drawing.

With the spread of writing tools containing fluorescent ink in the barrel body that serves as the writing tool body, a variety of writing tools having the pen tip shapes and the structures that enable wide line drawing have been put on the market. This offers users a wide selection of writing tools according to their usage, bringing comfortable use.

As inks used for the highlight markers and others, dye inks (water-based dye inks, oil-based dye inks) in which fluorescent dyes or oil-based dyes are used as colorants, and pseudo-pigment inks in which dyes are encapsulated in fine resin particles are known.

Since these inks include coloring material that is transparent, the hue of the ink bulk itself and the appearance of the pen core or the sliver impregnated with the ink end up looking dark. Note that pigment inks give good color brilliance to the ink bulk itself.

When the pen core is impregnated with an ink having a weak tinting ability such as fluorescent ink (for example, yellow fluorescent ink), the hue of its appearance is not significantly different from that of the writing line. However, when an ink having a strong tinting ability ink (pink, red, blue, green inks, etc.) permeates into the pen core, even if the drawn line has a light color, the pen core itself becomes blackish, so that it becomes difficult to distinguish the hue of the drawn line from the color of the pen tip, which is a problem. In particular, for a writing tool having a visible part (window) through which visual recognition of the direction of writing is allowed (see, for example, Patent Document 1), the pen tip is large and the cap is transparent, which poses a problem that the blackishness of the pen tip becomes so conspicuous that the vividness and color distinctiveness are diminished.

On the other hand, as the prior art for processing pen tips by resin coating, coloring, etc., there are known configurations as follows:

1) a raw fabric rod for pen tips which, in order to prevent ink from bleeding, moving to the end of the pen shaft and staining as well as to prevent the raw rod made of fibers from fluffing on the surface thereof, is characterized in that the surface of the raw rod of fibers which is formed by bundling the fibers in the longitudinal direction by thermal processing and resin binding is covered with a vehicle containing cellulose derivatives with a colorant as a coating component (see Patent Document 2, for example); and

2) a pen tip which is formed by bundling synthetic fibers with a binder, shaping the fiber bundle into a pen tip form and dyeing the pen tip form so as to color the whole surface thereof, thus enabling production of a uniformly colored pen tip even in either light or dark color, whereby allowing easy change of color by changing dyes only (see, for example, Patent Document 3).

Though the raw fabric rod for pen tips and the pen tip disclosed in the above Patent Documents 2 and 3, are colored in advance in part or as a whole of the pent tip surface, once the pen tip soaks up an ink having a strong coloring ability, the pen tips may still present blackish color. In the pen tips colored by dyeing, usable inks may be limited. Further, at present there is a problem that the hue of the coloring of the pen tip and the hue of the drawn line are somewhat different. This is the current situation of the pen tips. The Patent Documents 2 and 3 are different in the object, the subject and the technical idea (configuration and working effect) from those of the present invention.

Prior Art Documents

Patent Documents

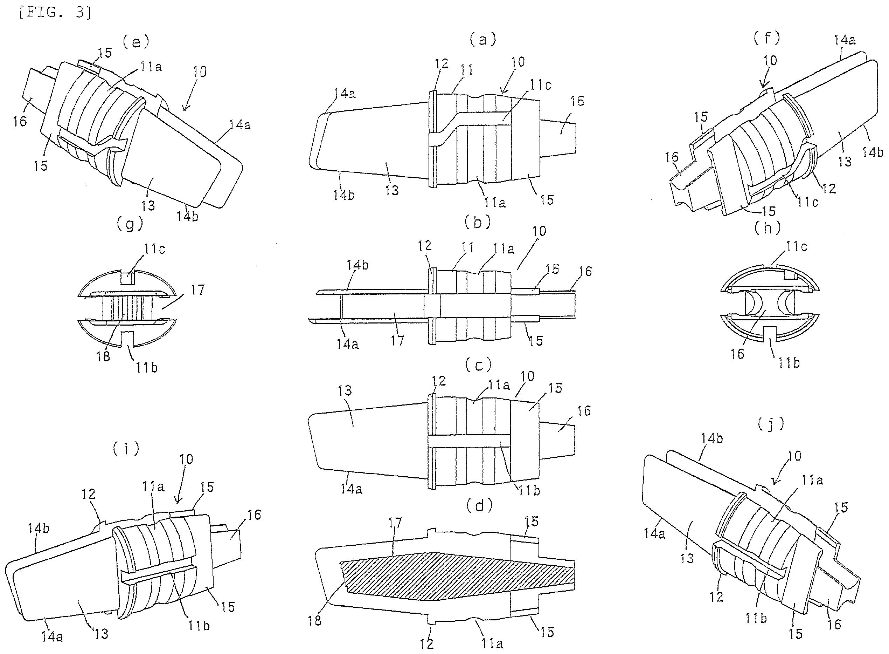

Patent Document 1: Japanese Patent Application Laid-open No. 2000-52682 (Claims, FIG. 7 and others)
Patent Document 2: Japanese Patent Application Laid-open No. 8-267982 (Claims, Fig. 3 and others)
Patent Document 3: Japanese Patent Application Laid-open No. 2003-11569 (Claims)

Summary of the Invention

Problems to be Solved by the Invention

In view of the above-described problems of the prior art and the current situation, the present invention has been devised to solve the problems. An object of the present invention is to provide a pen tip that can enhance its color brilliance and color distinctiveness without producing any difference between the hue of the pen tip by coloring and the hue of its drawn line, as well as to provide a writing tool using the pen tip.

Means for Solving the Problems

The inventor hereof has intensively studied so as to solve the above-described conventional problems, and has found that a pen tip with a pen core satisfying the above object and a writing tool equipped with the pen tip can be obtained by composing the pen core with a concealing material and setting the pen core so as to have a lightness of a specific value or greater.

That is, the pen tip of the present invention is a pen tip equipped with a pen core containing a concealing material, and is characterized in that the lightness (L* value) of the pen core in the L*a*b* (CIELAB) color system is equal to 80 or higher when the pen core is not impregnated with ink. Further, the pen tip is characterized in that the lightness (L* value) of the pen core impregnated with ink is 30 or higher.

It is preferable that the concealing material is at least one selected from titanium oxide, zinc oxide, boron nitride, and barium sulfate, and has an average particle size of 50 to 1000 nm.

Also, it is preferable that the pen core is composed of a sintered core or a fiber bundle core, and the concealing material is fixed to the sintered core or the fiber bundle core.

A writing tool of the present invention is characterized in that the writing tool is equipped with the pen tip having the above configuration, and is charged with a dye ink or a resin fine particle pigment ink containing a dye.

The color difference ΔE between the drawn line and the pen core is preferably less than 40.

Effect of the Invention

According to the present invention, it is possible to enhance the color brilliance of a pen tip and the color distinctiveness at the pen tip and to provide a pen tip without producing difference between the hue of the colored pen tip and its drawn line, as well as a writing tool using the pen tip.

Brief Description of Drawings

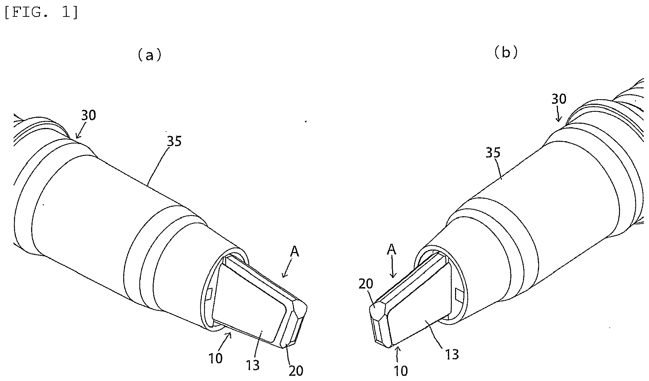

[FIG. 1] Illustrations showing an example of an embodiment in which a pen tip of the present invention is attached to a front barrel of a writing tool. (a) a perspective view seen from the left side, and (b) a perspective view seen from the right side, which is the opposite side of (a).

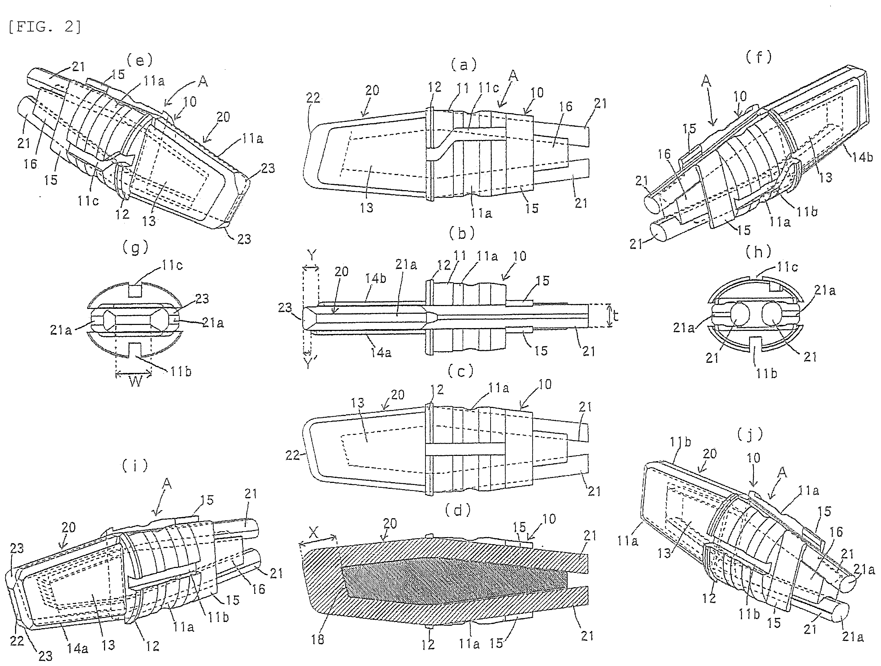

[FIG. 2] Illustrations each showing an example of an embodiment of a pen tip of the present invention, (a) a rear view, (b) a plan view, (c) a front view, (d) a vertical sectional view, (e) a perspective view seen from the left side, (f) a perspective view seen from the right side of (e), (g) a right side view, (h) a left side view, (i) a perspective view seen from the left side, which is the opposite side of (e), and (j) a perspective view seen from the right side of (i) .

[FIG. 3] Illustrations(a) to (j) showing an example of a retention body, (a) a rear view, (b) a plan view, (c) a front view, (d) a vertical sectional view, (e) a perspective view seen from the left side, (f) a perspective view seen from the right side of (e), (g) a right side view, (h) a left side view, (i) a perspective view seen from the left side, which is the opposite side of (e), and (j) a perspective view seen from the right side of (i).

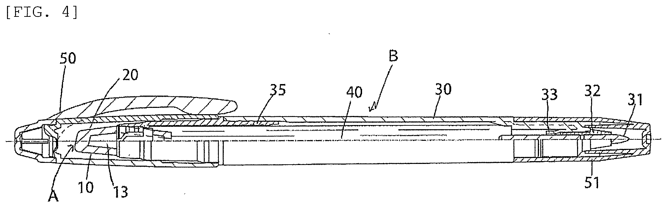

[FIG. 4] A partial vertical section showing an example of a writing tool using the pen tip of FIG. 2.

Mode for Carrying Out the Invention

An embodiment of the present invention will be detailed with reference to the drawings.

FIGs.1(a) and 1(b) are perspective views each showing one example of the embodiment in which a pen tip of the present invention is attached to the front barrel of a writing tool; FIGs. 2(a) to 2(j) are views each showing an example of the embodiment of the pen tip of the present invention; FIGs. 3 (a) to 3 (j) are views each showing an example of a retention body; and FIG. 4 is a partial vertical section showing an example of a writing tool using the pen tip of FIG. 2.

A pen tip A of the present embodiment includes, as shown in FIGs. 1 and 2, a retention body 10 having a visible part allowing visual recognition of the writing direction, and a pen core 20 attached to the retention body 10.

As shown in FIGs. 1, 2(a) to 2(j), and 3(a) to 3(j), the retention body 10 fixes the pen core 20 serving as the writing core thereto, and is bonded to the front opening of a front barrel 35 of a barrel body 30, and includes a rounded main portion 11, and a flange portion 12 and a visible part 13 allowing visual recognition of the writing direction, on the front side of the main portion 11. Formed on the front side of the visible part 13 are retainers 14a, 14b for holding the front side (endface) of the pen core 20. In the present embodiment, the dimensions of the front retainers 14a, 14b in the longitudinal direction are made different, that is, the front retainer 14a has a long length for holding the front side (endface) of the pen core 20 and the front retainer 14b has a short length. The front end of the front retainer 14a is extended to the same position as the front end of the pen core 20, whereas the front retainer 14b is sized shorter by the amount of protrusion (protrusion length) as described later. Though in the retention body 10 to hold the front side (endface) of the pen core 20, the front retainer 14a is longer while the front retainer 14b is shorter, the holding lengths of the front retainer 14a and the front retainer 14b may be specified to be the same.

Connected on the rear side of the main portion 11 is a rear retainer 16 having retaining pieces 15. The retention body 10 thus formed of these parts has an aftermentioned retaining groove 17 formed longitudinally around the whole outer peripheral surface thereof so as to hold the pen core 20 having a U-shaped form. Further, the main portion 11 has a fitting indent 11a formed transversely around the outer peripheral surface thereof, and also has a linear air vent channel 11b and a cranked air vent channel 11c formed in the length direction on the outer side surfaces as grooves for air ventilation.

The entire retention body 10 thus configured is made of hard materials. For example, the hard materials having visibility are made of metal, glass or resin having no rubberlike elasticity. The retention body may be formed by molding with a material having a visible light transmittance of 50% or more, such as PP, PE, PET, PEN, nylon (including general nylon such as 6 nylon and 12 nylon, and amorphous nylon) and acryl, polymethylpentene, polystyrene, and ABS, as the resin allowing visual recognition and having no rubberlike elasticity, whereby the characters written in the writing direction can be seen through the visible part 13. Note that only the visible part 13 may be made of a material allowing visual recognition. The visible light transmittance can be determined by measuring the reflectance with a multi-light source spectrocolorimeter (manufactured by Suga Test Instruments Co., Ltd., (MSC-5N)).

The retention body 10 may be made of one of the above materials, or may be made of two or more kinds of materials from the viewpoint of further improving durability and visibility, and can be molded by various molding methods such as injection molding, blow molding and the like.

As shown in FIGs. 1 and 2(a) to 2(j), the pen core 20 has a circular cross-section, generally has a substantially U-shaped form, and includes ink feeders 21, 21 and a writing part 22 for leading ink from the ink feeders 21, 21. The pen core 20 has cut faceted portions 23, 23 where the corners between the writing part 22 the ink feeders 21, 21 are beveled. Further, formed on the exterior of the ink feeders 21, 21 are flat cut portions 21a forming a flat surface.

In the present invention, the pen core 20 having the above configuration contains a concealing material, and has the lightness (L* value) of 80 or higher in the L*a*b* (CIELAB) color system when no ink is soaked in the pen core.

The above L*a*b* (CIELAB) color system is one of the methods for representing the color tone for performing hue evaluation, which was formulated by the International Commission on Illumination (CIE) so as to express colors sensed by the human eye in a color space. This lightness (L* value) is an index representing the tendency of lightness, ranging from 0 to 100. By specifying the lightness (L* value) at 80 or higher, it is possible to enhance the color brilliance in the pen tip and enhance the color distinctiveness of the pen tip. On the other hand, if the lightness (L* value) is lower than 80, the effect of the present invention cannot be exhibited.

From the viewpoint of enhancing the effect of the present invention, it is preferable that the lightness (L* value) is in the range of 90 to 100. Further, it is more preferable that C* value, the degree of achromaticity, is lower than 30.

The degree of achromaticity C* is calculated by the following formula (B).

$$\text{Degree of achromaticity } C* = (a*^2 + b*^2)^{1/2} \qquad \cdots (B)$$

In the present invention, the method for making the lightness (L* value) in the L*a*b* (CIELAB) color system of the pen core 20 containing a concealing material equal to 80 or higher is not particularly limited as long as the lightness (L* value) can be set to 80 or higher by containment of the concealing material. Examples of the method may include: adhering a concealing material to a pen core after formation of the pen core; combining a pen core material and a concealing material to form a pen core. Specific production methods will be described later.

The concealing material that can be used is at least one selected from titanium oxide, zinc oxide, boron nitride, and barium sulfate, which are high-refractive materials (singly or a mixture of two or more, hereinafter the same applies), with the average particle size thereof preferably 50 to 1000 nm.

Setting the average particle size of the concealing material at 50 nm or greater enables the concealing material to be efficiently contained in the pen core, whereas setting at lower than 1000 nm can eliminate deterioration of ink delivering performance. More preferably, the average particle size is 100 to 500 nm.

The content of the concealing material is not particularly limited as long as the concealing material contained in the pen core can impart a weak concealing property to the pen core so as to be able to make the aforementioned lightness (L* value) 80 or higher, enhance the color brilliance in the pen tip and improve color distinctiveness. From the viewpoint of ink delivering performance of the pen core and easy adhesion or combining of the concealing material with the pen core, the amount of the concealing material to the total amount of the pen core is preferably 0.01 to 10% by mass, and more preferably 1 to 5% by mass.

On the other hand, the pen core 20 is made of a porous material because it should have a good ink delivery performance though it contains the above concealing material. The pen core comprises, for example, natural fiber, fur fiber, a parallel fiber bundle formed of one or a combination of polyacetal resin, polyethylene resin, acrylic resin, polyester resin, polyamide resin, polyurethane resin, polyolefin resin, polyvinyl resin, polycarbonate resin, polyether resin, polyphenylene resin, etc., a fiber core obtained by processing a fiber bundle such as felt or processing these fiber bundles with resin, a porous body (sintered core) obtained by sintering a plastic powder of thermoplastic resin such as polyolefin resin, acrylic resin, polyester resin, polyamide resin, polyurethane resin.

The pen core 20 is preferably a fiber bundle core, a fiber core, a sintered core, a felt core, a sponge core, or an inorganic porous material core, and more preferably a sintered core from the viewpoint of deformation moldability and productivity.

In the present invention, as specific methods for producing the pen core 20 having the above characteristics, the following methods of producing the pen core can be mentioned, for example:

production method 1), a pen core after shaping is soaked in a processing liquid containing at least concealing material and fixing resin, dried and fixed;
production method 2), the material forming a pen core and concealing material are combined to form a pen core; and,
production method 3), concealing material is mixed or encapsulated in a material forming a pen core to produce a pen core.

As the fixing resin used in 1) above, an acrylic resin, a styrene acrylic resin, a urethane resin, or the like can be used from the viewpoint of ink delivering performance, no impact on ink and the like. In this production method, in view of ensuring a good ink delivering performance (the porosity described later) without clogging the pen core, a fixing resin having a solid component concentration of 1 to 30% by mass, a concealing material and a solvent as required, are compounded to prepare a processing liquid, then a pen core formed of a shaped fiber bundle core, fiber core, sintered core, felt core, sponge core, inorganic porous core, and the like is impregnated with the processing liquid, then is dried and fixed, whereby the above-mentioned pen core having the predetermined porosity and fixed with the concealing material at the predetermined ratio can be produced.

Alternatively, a pen core can be set with its porosity increased (larger porosity) and impregnated with the processing liquid to reduce the porosity so as to obtain a pen core having a predetermined porosity and a predetermined ratio of fixed concealing material.

In the above method 2) of producing a pen core by combining a material forming the pen core and a concealing material, for example, when the pen core is a sintered core, at least the above-mentioned plastic powder and the concealing material are mixed in a predetermined ratio, then sintered under suitable conditions, whereby a pen core having a predetermined porosity and a predetermined ratio of concealing material combined is obtained.

In the production method 3), the aforementioned concealing material (including fibrous titanium oxide, etc.) is mixed with a molten material obtained by melting a resin which becomes the fiber material forming a pen core and fibers containing the concealing material are spun, whereby the thus obtained fibers are used to form the aforementioned fiber bundle core or fiber core. When the pen core is a sintered core, at least the concealing material is encapsulated, in advance, in the above-mentioned plastic powder, then a sintered core precursor is prepared and sintered under suitable conditions, whereby a pen core having a predetermined porosity and a predetermined ratio of concealing material is obtained.

Further, the pen core 20 used in the present invention contains a concealing material having the above-mentioned characteristics in a predetermined ratio while the porosity, size, hardness, etc. may vary depending on the production method inclusive of fixing and combining the concealing material, the type of ink, the type of writing tool, and the like. For example, the porosity is preferably 30 to 60%.

The pen core 20 of the present embodiment is composed of a sintered core (sintered body) having a porosity of 55% obtained by sintering a polyethylene powder having an average particle size of 200 $\mu$ m and titanium oxide having an average particle size of 350 nm. In the present invention, the "average particle size" indicates the average value of the particle sizes measured by the electron microscope, and is the average value of the particle sizes measured for 20 particles in the image projected on the electron microscope. When the particle is not circular, the value of the sum of the lengths of the longest line segment and the shortest line segment among the line segments linking arbitrary two points on the contour forming a pore, divided by two, is assumed as the particle size of the particle.

On the other hand, the porosity is calculated as follows . First, a pen core having a known mass and apparent volume is dipped in water, and fully impregnated with water, and then the mass is measured in a state of being taken out from the water. From the measured mass, the volume of water soaked up in the pen core is derived. Assuming that the volume of the water is same as the pore volume in the pen core, the porosity can be calculated from the following formula (A) :-

$$\mathtt{Porosity\ (unit:\%)\ =\ (water\ volume)/(apparent\ volume\ of}$$

$$\mathtt{the\ pen\ core)\ x\ 100\ \cdots\ (A)}$$

Further, the dimension t in the width direction of the pen core 20 of the present embodiment is preferably 0.50 mm or greater, particularly 1.00 to 3.00 mm, from the viewpoint of ensuring a sufficient writing flow rate.

The writing part 22 has an inclined shape (knife cut shape) so as to produce an inclination for easy writing, and the inclination and the like are appropriately set in accordance with writing convenience. Further, the writing part 22 has a thick line width W, and the writing part is formed such that the drawing line width W is preferably 1 mm or more, and more preferably, 2 mm or more.

In the pen tip A, the pen core 20 is fixed (attached) to the retention body by fitting of the pen core 20 into the retaining groove 17 and retention of the rear retainer 16 having front retainers 14a, 14b and the retaining piece 15. Further, in order to ensure fixture (anti-falling) of the pen core 20, bonding with an adhesive or fusing may be used. Further, a wedge-shaped non-smooth surface portion may be formed on the contact surface of the retaining groove 17 of the retention body 10 that comes into contact with the writing part 22 of the pen core 20 to further ensure the fixture of the pen core 20 to the retention body 10. In this embodiment, as shown in FIG. 2(d), the wedge-shaped non-smooth surface 18 is formed.

In the present embodiment, as shown in FIG. 2(b), the protrusion amount Y on the front side of the pen core 20 from the retention body 10 is 0.65 mm or more and less than 1 mm. This setting provides a configuration in which the protrusion amount Y of the front part of the pen core 20 is supported to the utmost by pressing the writing core with the inner surface of the retention body even if writing is performed with a strong writing load, whereby the pen core is prevented from being damaged, presenting excellent durability without impairing the writing performance. If the protrusion amount Y is shorter than 0.65 mm, the retention body may interfere writing when the pen body is leaned in writing. On the other hand, if the protrusion amount Y is longer than 1 mm, a strong writing load may impair writing performance. Note that X shown in FIG. 4(d) is the writing core width, and the protrusion amount Y is preferably 0.65 mm or more and less than 1 mm, and is preferably less than 50% of the writing core width X.

Further, in the present invention, in addition to the above embodiment, setting the protrusion amount Y of the pen core 20 from the retention body 10 on the front side to 40 to 65% of the thickness t of the pen core, can also prevent breakage of the pen core and present excellent durability without impairing writing performance. By setting the protrusion amount Y on the front side of the writing core to 40 to 65% of the thickness t of the pen core 20 (Y/t is 40 to 65%), even when a strong writing load is applied during writing, it is possible, thanks to the relationship between the protrusion amount Y on the front side of the pen core 20 and the thickness of the writing core, to secure the strength of the pen core more and provide a configuration in which the protrusion amount Y of the front part of the pen is supported to the utmost by pressing the pen core with the inner surface of the retention body, whereby it is possible to further prevent breakage of the pen core and present excellent durability without impairing writing performance. More preferably, the protrusion amount Y on the front side of the pen core 20 is 48 to 58% of the pen core thickness t. If the protrusion amount Y is less than 40% of the thickness t of the pen core, writing performance may be impaired by a strong writing load, while if it exceeds 65%, the retention body becomes thick so that it is difficult to see paper when writing. Note that X is the writing core width X, and the protrusion amount Y is preferably 40 to 65% of the pen core thickness t and is preferably less than 50% of the writing core width X (Y/X is less than 50%).

As a particularly preferable form, it is desirable that the protrusion amount Y on the front side of the writing core from the retention body is 0.65 mm or more and less than 1 mm and is 40 to 65% of the writing core thickness t.

The pen tip A of the present invention thus configured includes at least the retention body 10 having the visible part 13 allowing visual recognition of the writing direction, and the pen core 20 having the above features and attached to the retention body 10. The pen core 20 contains, by adhering, compounding, or any other ways, the above-described concealing material and is set with a lightness (L* value) of 80 or above in the L*a*b* (CIELAB) color system, whereby it is possible to enhance the color brilliance in the pen tip and enhance the color distinctiveness at the pen tip.

The writing tool of the present invention is characterized by being equipped with a pen tip having the above configuration. Since the writing tool of the present invention is characterized by being equipped with a pen tip having the above configuration, the other features than the pen tip are not particularly limited.

FIG. 4 shows an example of an embodiment of a writing tool of the present invention, and is a partial vertical section showing an example of a writing tool using the pen tip A of FIG. 2.

A writing tool B of the present embodiment includes the pen tip A having the above configuration, a barrel body 30 which is the main body of the writing tool, an ink storage body 40, and caps 50 and 51.

As shown in FIG. 4, the writing tool B has the configuration in which ink is stored in the ink storage body 40 in the barrel body 30 forming the writing tool body, a pen element 31 for thin lines at the right end in FIG. 4 and the other end (the left side in FIG. 4) have the pen tips A of the above configuration so as to supply ink of the ink storage body 40 to the pen element 31 and the pen core 20 of the pen tip A by capillary effect. Reference numerals 50 and 51 are transparent or translucent caps protecting the pen tip A and the pen element 31, which are detachably fitted to the ends of the barrel body 30 described later.

The barrel body 30 is formed of, for example, a thermoplastic resin, a thermosetting resin, or the like. It is composed of a cylindrical body that accommodates the ink storage body 40 impregnated with an ink for writing tools and has a rear barrel holder 33 having a fitting for fixing a rear barrel 32 holding the pen element 31 for thin lines at its one end, or the right side in FIG. 4, and the front barrel 35 for fixing the pen tip A having the above configuration at the other end, or the left side in FIG. 4.

The barrel body 30 is shaped in a cylindrical form by molding a resin such as polypropylene or the like, and serves as a main writing tool body (barrel body). The barrel body 30 as a whole and the front barrel 35 are molded opaque or transparent (and translucent), but either may be adopted in view of appearance and practical use. In addition, the barrel body 30 has a structure for fixing the front barrel 35 by fitting or the like, on the front side thereof.

The ink storage body 40 is impregnated with an ink for writing tools such as water-based ink and oil-based ink, and its examples include natural fiber, fur fiber, fiber bundle formed of one or a combination of polyacetal resin, acrylic resin, polyester resin, polyamide resin, polyurethane resin, polyolefin resin, polyvinyl resin, polycarbonate resin, polyether resin, polyphenylene resin, etc., a processed material of fiber bundles of felt etc., and porous materials such as sponges, resin particles, and sintered bodies. This ink storage body 40 is accommodated and held in the barrel body 30.

The composition of the ink to be used for writing tools is not particularly limited, and may be suitably formulated as a compound of an aqueous dye ink, an oil-based ink, or a thermochromic ink, depending on the application of the writing tool; for example, for underlining pens and the like, fluorescent dyes such as Basic Violet 11, Basic Yellow 40, thermochromic microcapsule pigments, and the like can be formulated as components.

Preferably, a dye ink or a resin fine particle pigment ink containing a dye is desirable.

An example of a resin fine particle pigment ink containing a dye is a dispersion liquid of colored resin fine particles which are composed of at least cyclohexyl (meth) acrylate monomer and a basic dye or an oil-soluble dye; a water-soluble organic solvent; and water. The dispersion liquid of colored resin fine particles is formed by dispersing colored resin fine particles in water, where the content of cyclohexyl (meth) acrylate monomer is 30% by mass or more with respect to all the polymer components constituting the colored resin fine particles, and the content of the basic dye or the oil-soluble dye is 15% by mass or more with respect to all the polymer components.

The ink is preferably formulated by adjusting the kinds of ink ingredients and their compound ratios so as to present the ink viscosity (25°C: cone/plate viscometer) of 1 to 5 mPa·s, a surface tension of 30 to 60 mN/m and so that the ink outflow from the pen core 20 and pen element 31 falls in 5 to 20 mg/m.

In the present invention, it is preferable that the color difference $\Delta E$ between the writing line and the pen core is less than 40 from the viewpoint of making the effect of the present invention further apparent. It is desirable that the color difference $\Delta E$ is lower, while it hardly exhibits effectively color distinctiveness if $\Delta E$ is 40 or more.

This color difference can be adjusted by appropriately adjusting the types and the contents of color material, ink and concealing material to be used.

Further, from the viewpoint of further exerting the effect of the present invention, it is preferable that the lightness (L* value) of the pen core in the state of being impregnated with ink is 30 or higher.

When a thermochromic ink is used as the ink for writing tools, a thermoplastic elastomer whose ability (erasure ratio) of erasing pencil drawn lines, defined by JIS S6050-2002 is lower than 70%, is formed on the top of the cap 50, whereby it is possible to provide a rubbing body that easily generates friction heat and has low wear.

When the pen tip A including at least the retention body 10 to which the pen core 20 having the above-mentioned configuration is inserted into the front barrel 35, the writing core 20 is attached (fixed) to the barrel body 30, which is the writing tool body via the retention body 10 while the rear end portions 21a, 21a of the ink feeders 21, 21 of the pen core 20 enter the interior of the front part of the ink absorbent body 40. Further, when the rear barrel 32 holding the pen element 31 is inserted into the rear barrel holder 33 of the barrel body 30, the pen element 31 is attached (fixed) to the barrel body 30, which is the writing tool body, by fitting or the like.

It should be noted that recesses may be formed in the front-side interior of the ink storage body 40 so as to be inserted with the rear end portions 21a, 21a of the ink feeders 21, 21. Further, while there are cases where ink dripping or the like may occur from the pen tip when the pressure inside the barrel body 30 increases or from other reasons, in the writing tool B of the present embodiment, as shown in FIG. 2, the air vent channels 11b, 11c can adjust the balance between the interior of the barrel body 10 and the outside air.

The cap 50 is made of a transparent resin or the like presenting visibility, and is configured to be detachably attached to the outer peripheral surface on the front side of the front barrel 15 by fitting or the like. The cap 51 is detachably attached to the outer peripheral surface of the other end of the barrel body 30, opposite from the front barrel 35.

In the writing tool B according to the present invention, the ink storage body 40 that stores the ink for writing tool is inserted and held in the barrel body 30 of the writing tool, the pen tip A having the above configuration is then fixed by fitting on the front side via the front barrel 35, and the rear barrel holder 33 fixed with the pen element 31, is fitted and fixed to the other end side, whereby it is possible to easily fabricate the writing tool B. Thus, the ink stored in the ink storage body 40 is efficiently supplied to the writing part 22 of the pen core 20 in the pen tip A as well as to the pen element 31 by capillary force and applied for writing.

The thus configured writing tool B having a twin-type pen core has, as shown in FIGs. 4 and 1, the retention body 10 having at least the visible part 13 allowing visual recognition of the writing direction and the pen tip A with the pen core 20 attached to the retention body 10. As the pen core 20 is made to contain the above-described concealing material by sticking, compounding or the like so as to set the lightness (L* value) of the pen core in the L*a*b* (CIELAB) color system at 80 or higher, it is possible to enhance the color brilliance in the pen tip and the color distinctiveness of the pen tip, and to obtain the writing tool B having the pen tip which can facilitate placement of a starting position for drawing by observing the visible side through the visible part 13.

Conventionally, there has been a problem that once an ink having a strong coloring ability (such as pink, red, blue, and green inks) permeates into the pen core, the pen core itself becomes too blackish even if the drawn line has a light color, to distinguish the hue of the writing line from the pen tip. However, in the writing tool B of the present embodiment, the pen tip A having the above characteristics can enhance the color brilliance in the pen tip, producing almost no difference in the hue between the drawn line and the pen tip, so as to be able to improve the color distinctiveness at the pen tip. Further, observation of the visible side through the visible part 13 facilitates placement of the pen tip at the starting position of drawing. At the same time, the lengths of the front retainers 14a, 14b that hold the front side of the pen core 20 are made different, so that the protrusion amount Y on the front side of the pen core 20 from the retention body 10 is specified to be 0.65 mm or more on the longer holding side, and to be less than 1 mm on the shorter holding side. Specifically, since the front end side (end face) of the pen core 20 is held by the longer front retainer 14a and the shorter front retainer 14b, this configuration allows a right-handed user to easily draw a line from left to right with the protruded portion (protrusion amount) while the strength for securely holding (protecting) the protruded portion of the pen core with the longer front retainer 14a located on the left side is enhanced. Thus, provision of the retaining structure of the writing part 22 with the longer front retainer 14a and the shorter front retainer 14b for holding the front end side (endface) of the pen core 20 and limitation of the projection amount Y provide the utmost structure of pressing the writing core with the inside surface of the retention body 10 (14a) even when a strong writing load is applied, whereby it is possible to provide a writing tool that can prevent breakage of the pen core 20 and is excellent in durability without impairing writing performance. Further, since the retention body 10 in the present embodiment is configured such that the endface of the retention body 10 on the opposite side to the writing direction is projected further than the retention body endface on the writing direction side, a writing tool that is particularly effective when the user draws a line from left to right by the right hand is provided. When the endfaces of the retention body 10 are formed so as to project the opposite way to the above-mentioned, a writing tool that is particularly effective when the user draws a line from right to left by the left hand and when the user draws a line from top to bottom by the right hand is provided.

Further, in the writing tool B, by setting the protrusion amount Y on the front side of the writing core 20 from the retention body 10 to 40 to 65% of the thickness t of the writing core, a writing tool that can prevent breakage of the pen core 20 and is excellent in durability, similarly to the above embodiment is provided. That is, also in this embodiment, by setting the protrusion amount Y on the front side of the writing core to 40 to 65% of the thickness t of the pen core, even when a strong writing load is applied during writing, it is possible, thanks to the relationship between the protrusion amount Y on the front side of the pen core and the thickness of the pen core, to secure the strength of the pen core more and provide a configuration in which the protrusion amount Y of the front part of the pen core is supported to the utmost by pressing the writing core with the inner surface of the retention body, whereby it is possible to further prevent breakage of the pen core and present excellent durability without impairing writing performance.

The pen tip and writing tool of the present invention are not limited to the above embodiment, and can be variously modified without changing the technical idea of the present invention.

Further, the above embodiment was described by detailing the pen core 20 of a sintered core type, but the pen core 20 may be not only of a sintered body but also of a fiber bundle, a fiber core, a foam, a spongy body, and a felt body as described above.

Further, the above embodiment was described by showing the writing tool of a sliver type in which ink stored in the ink storage body 40 is efficiently supplied to the writing part 22 of the pen core 20 by capillary force is shown, but the invention may be applied to a writing tool equipped with a valve mechanism, which includes, for example, a configuration in which an ink chamber storing ink is provided directly to a barrel body forming a writing tool body, a valve mechanism is disposed between the ink chamber and a writing core, wherein the valve rod is moved back by pressing in the pen tip direction, opposing the urging force of the spring in the valve mechanism, so as to release the valve and deliver ink and to supply ink to the pen core.

Furthermore, the above embodiment was described by referring to a twin-type writing tool having the pen tip A equipped with the pen core 20 attached to the retention body 10 having the visible part 13, and the pen element 31 on the opposite side. However, the pen element 31 may be omitted (by forming the barrel body of a bottomed cylinder shape) so as to provide a single-type writing tool having the pen tip 20. Also, the writing tool may be provided as a click-type.

In the writing tool B or the like of the above-described embodiment, the barrel of the writing tool body is formed so as to have a circular cross-section, but may have a cross section of an irregular shape such as a triangle, a quadrangle or more, or an elliptical shape.

Further, in each of the above embodiments, ink for writing tools (water-based ink, oil-based ink, thermochromic ink, resin fine particle pigment ink containing a dye) is used, but liquid materials such as liquid cosmetics, liquid medicines, coating liquids, and correction liquids may be used.

Examples

Next, the present invention will be described in more detail using examples, but the present invention is not limited to the following examples.

[Example 1]

A pen tip, a writing tool, a processing liquid having the following composition and an ink for writing tools, which have the following configurations to FIGs. 1 to 4, were used. The sizes and other specifications of the core, the retention body and others that were used are specified as follows.

(Configuration of the retention body 10)

Made of acrylic resin and having visible light transmittance of 85% [the visible light transmittance was determined by measuring the reflectance with a multi-light source spectrophotometer (MSC-5N) manufactured by Suga Test Instruments Co., Ltd.]

The size of the visible part 13 (quadrangle) after attaching the pen core: 5 mm x 6 mm x 3 mm x 4 mm.

(Configuration of the pen core 20)

Polyethylene (PE) sintered core with a porosity of 60% (after fixing the concealing material), writing part 22: W = 4 mm, knife cut shape, ink feeder: $\phi$ (t) 1.6 mm, protrusion amount: Y = 0.85 mm (53% of t), protrusion amount on the opposite side of protrusion amount Y: Y'= 0.65 mm (40% of t), writing core width: X = 1.75 mm.

(Configuration of writing tool members other than retention body 10 and pen core 20)

Ink storage body: PET fiber bundle with a porosity of 85%, $\phi$ 6 x 77 mm,
writing tool body, cap: made of polypropylene (PP), and
pen element 31: polyester fiber bundle core with a porosity of 60%, $\phi$2.0 x 40.0 mm.

(Composition of the processing liquid for fixing the concealing material to the pen core)

As the processing liquid for the pen core 20, a processing liquid having the following composition (total 100% by mass) was used.

Titanium oxide (average particle size of 350 nm) in an amount of 3.8% by mass,
adhesive resin (styrene acrylic resin, solid content concentration: 30%) in an amount of 7.7% by mass, and
ion-exchanged water for the rest.

(Method of fixing the processing liquid to the pen core)

The concealing material was fixed to the pen core 20 by the following method using the above processing liquid.

First, the pen core was impregnated and then dried under 80°C. dry conditions for 2 hours to allow the pen core 20 to contain the concealing material. The fixed amount of the concealing material (titanium oxide) was about 4% by mass in terms of mass change (excluding the amount of fixing resin) before and after impregnation.

(Measurement of the lightness (L* value) and the degree of achromaticity C*, etc. of the pen core 20)

The lightness (L* value) of the pen core 20 in the L*a*b* (CIELAB) color system was measured using the following device, and the degree of achromaticity C* was calculated.

(Measuring device)

VSS7700, micro spectrometer for very small area, manufactured by NIPPON DENSHOKU KOGYO CO., LTD.

Lightness (L* value) of the pen core 20 = 90, degree of achromaticity C* = 10

(Ink composition for writing tools: Ink color: blue, red)

The dispersion liquids of the colored resin fine particles of production examples 1 and 2 below were used. In addition, the following "part" represents mass part. The total amount (amount of sum) of components in production examples 1 and 2 is 500 parts.

(Production Example 1)

A stirrer, a reflux condenser, a thermometer, a nitrogen gas introduction tube, and a 1000 ml separatory funnel for monomer charge were attached to a 2 liter flask, which was set in a warm water vessel and charged with 329.5 parts of distilled water, 5 parts of glycerol monomethacrylate [BLEMMER GLM, manufactured by NOF CORPORATION], 5 parts of sodium 2-sulfoethyl methacrylate [acrylic ester SEM-Na, manufactured by Mitsubishi Chemical], 20 parts of polymerizable surfactant [manufactured by ADEKA CORPORATION, ADEKA REASOAP SE-10N, ether sulfate] and 0.5 part of ammonium persulfate, and the internal temperature was raised to 50°C. while introducing nitrogen gas.

On the other hand, a mixed monomer consisting of 55 parts of cyclohexyl methacrylate monomer and 35 parts of n-butyl methacrylate as another monomer, 40 parts of an oil-soluble dye [Savinyl Blue GLS, manufactured by Clariant], and 10 parts of a cross-linking agent [triallyl isocyanurate, manufactured by Nihon Kasei CO., LTD., "TAIC"] were mixed to prepare a liquid.

This prepared liquid was added from the separating funnel into the flask kept at a temperature around 50°C. over 3 hours while stirring, so that emulsion polymerization was carried out. After further aging for 5 hours, the polymerization was completed to obtain a dispersion liquid of colored resin fine particle for water-based ink (particle 1) .

The content of the cyclohexyl methacrylate monomer was 50.0% by mass with respect to all the polymer components constituting the colored resin fine particles, and the content of the oil-soluble dye was 36.4% by mass with respect to all the polymer components. The average particle size of the colored resin fine particles was 40 nm.

(Production Example 2)

An aqueous dispersion liquid of colored resin fine particle for water-based ink (particle 2) was obtained in the same manner as in the production example 1 except that the amount of distilled water was 340.5 parts, the amount of cyclohexyl methacrylate monomer was 30 parts, the amount of n-butyl methacrylate was 45 parts, and as dyes, 20 parts of an oil-soluble dye [VALIFAST Pink 2310N, manufactured by Orient Chemical Industries Co., Ltd.], 12 parts of an oil-soluble dye [Oil Pink 314, manufactured by Orient Chemical Industries Co., Ltd.], and 12 parts of an oil-soluble dye [VALIFAST Red 3312, manufactured by Orient Chemical Industries Co., Ltd.] were used.

The content of the cyclohexyl methacrylate monomer was 31.6% by mass with respect to all the polymer components constituting the colored resin fine particles, and the content of the oil-soluble dye was 46.3% by mass with respect to all the polymer components. The average particle size of the colored resin fine particles was 82 nm.

Using each of the dispersion liquids of colored resin fine particles (particles 1 and 2) produced in the above production examples 1 and 2, water-based ink compositions 1 and 2 for writing tools by a conventional method were prepared in the following compounding compositions (total amount 100% by mass) shown below.

Composition of inks 1 and 2 (total amount 100% by mass) :

50% by mass of dispersion liquid of colored resin fine particles for water-based ink of the production example 1 or 2;
1% by mass of pH adjuster (triethanolamine);
5% by mass of water-soluble organic solvent (ethylene glycol);
44% by mass of ion-exchanged water;
viscosity (25°C): 3.5 mPa·s (complate type viscometer, manufactured by TOKIMEC, TV-20);
surface tension (25°C): 35 mN/m (automatic surface tension meter DY-300, manufactured by Kyowa Interface Science Co., Ltd.);
production example 1:
lightness (L* value) of handwriting (drawn line): 73, degree of achromaticity C*: 65;
production example 2:

lightness (L* value) of handwriting (drawn line): 63, degree of achromaticity C*: 65;
lightness (L* value) of the pen core impregnated with ink: production example 1:38;
lightness (L* value) of the pen core impregnated with ink: production example 2:35;
color difference ΔE between the handwriting (drawn line) and the pen core of the production example 1 : 35; and,
color difference ΔE between the handwriting (drawn line) and the pen core of the production example 2 : 36.

The color difference was measured by VSS7700, a micro spectrometer for very small area, manufactured by NIPPON DENSHOKU KOGYO CO., LTD.

The writing tools B with inks 1 and 2 each, using the pen tip A of the example 1 conforming to FIGs. 1 to 4, were equipped with, at least, the retention body 10 having the visible part 13 allowing visual recognition of the writing direction and the pen tip 20 attached to the body 10. At least the pen core 20 had the concealing material (titanium oxide) adhered thereto, and the lightness of the pen core was 90 and the degree of achromaticity C* was 10 in the L*a*b* (CIELAB) color system. When writing on a high-quality paper surface using the writing tool, it was confirmed that the color brilliance of the pen tip was enhanced so that there was almost no difference in the hue between the drawn line and the pen tip, and the color distinctiveness of the pen tip was improved as compared with the conventional pen core 20 containing no concealing material.

It was also confirmed that the writing tool with the pen tip facilitating the placement of a starting position of drawing by the view of the visible side at the visible part 13 was obtained without impairing external appearance of the pen core 20.

Further, protrusion amount Y on the front side of the writing core 20 from the retention body 10 was less than 1 mm, specifically, Y = 0.85 mm, so that a line could be drawn with the protruded portion (protrusion amount) when the user drew a line from left to right by the right hand. Further, it was confirmed that a writing tool that was excellent in durability without either breakage of the writing core or impairment of writing performance even if an excess load was applied was provided.

Moreover, this writing tool was set in an automatic writing machine and tested in a method following JIS S6037. After drawing a straight line of 50 meters on a quality paper surface at a writing angle of 65° applying a writing load of 1 N at a speed of 7 cm/s, the state of the drawn line was visually checked. As a result, it was found that, due to the use of the above-described preferable ink composition, the pen tip gave good ink flow (5 to 20 mg/m), and that ink presented excellency in dryability of the drawn line and low-temperature stability while suppressing drying of the pen tip without causing blurring or strikethrough in the drawn line.

[Example 2]

A writing tool conforming to FIGs. 1 to 4 was used. The difference from the example 1 was only the configuration of the pen core 20, and the other configurations were the same as those of the example 1, so that their description is omitted.

(Configuration of the pen core 20)

Polyethylene (PE) sintered core with a porosity of 60% (after fixing the concealing material), writing part 22: W = 4 mm, knife cut shape, ink feeder: $\phi$ (t) 1.6 mm, protrusion amount: Y = 0.85 mm (53% of t), protrusion amount on the opposite side of protrusion amount Y: Y'= 0.65 mm (40% of t), writing core width: X = 1.75 mm.

(Producing method of the pen core)

A polyethylene powder having an average particle size of 200 $\mu$m and titanium oxide having an average particle size of 350 nm as a concealing material were mixed by a blender and then sintered to produce a sintered core.

(Configuration of the pen core 20)

Polyethylene (PE) sintered core with a porosity of 60% (after fixing the concealing material), writing part 22: W = 4 mm, knife cut shape, ink feeder: $\phi$ (t) 1.6 mm, protrusion amount: Y = 0.85 mm (53% of t), protrusion amount on the opposite side of protrusion amount Y: Y'= 0.65 mm (40% of t), writing core width: X = 1.75 mm.

(Measurement of the lightness (L* value) and the degree of achromaticity C* of the pen core 20, etc.)

The lightness (L* value) of the pen core 20 in the L*a*b* (CIELAB) color system was measured using the following device, and the degree of achromaticity C* was calculated.

(Measuring device)

VSS7700, micro spectrometer for very small area, manufactured by NIPPON DENSHOKU KOGYO CO., LTD.
Lightness (L* value) of the pen core 20 = 90, degree of achromaticity C* = 10;
lightness (L* value) of the pen core impregnated with ink: production example 1:40;
lightness (L* value) of the pen core impregnated with ink: production example 2:36;
color difference ΔE between the handwriting (drawn line) and the pen core of the production example 1 : 33; and,
color difference ΔE between the handwriting (drawn line) and the pen core of the production example 2 : 34.
The writing tools B with inks 1 and 2 each, including the pen tip A of the example 2 conforming to FIGs. 1 to 4, were equipped with, at least, the retention body 10 having the visible part 13 allowing visual recognition of the writing direction and the pen tip 20 attached to the body 10. At least the pen core 20 had the concealing material (titanium oxide) sintered and fixed thereto, and the lightness of the pen core was 90 and the degree of achromaticity C* was 10 in the L*a*b* (CIELAB) color system. When writing on a high-quality paper surface using the writing tool, it was confirmed that the color brilliance of the pen tip was enhanced so that there was almost no difference in the hue between the drawn line and the pen tip, and the color distinctiveness of the pen tip was improved as compared with the conventional pen core 20 containing no concealing material.
It was also confirmed that the writing tool with the pen tip facilitating the placement of a starting position of drawing by the view of the visible side at the visible part 13 was obtained without impairing external appearance of the pen core 20.
Further, also in the example 2, the amount of protrusion (protrusion amount) on the front side of the writing core 20 from the retention body 10 was less than 1 mm, specifically, the protrusion amount Y = 0.85 mm, so that a line could be drawn with the protruded portion (protrusion amount) when the user drew a line from left to right by the right hand and it was confirmed that a writing tool was provided which was excellent in durability without either impairment of writing performance or breakage of the writing core even if an excess load was applied. Moreover, this writing tool was set in an automatic writing machine and tested in a method following JIS S6037. After drawing a straight line of 50 meters on a quality paper surface at a writing angle of 65° applying a writing load of 1 N at a speed of 7 cm/s, the state of the drawn line was visually checked. As a result, it was found that, due to the use of the above-described preferable ink composition, the pen tip produced good ink flow (5 to 20 mg/m), and that ink presented excellency in dryability of the drawn line and low-temperature stability while suppressing drying of the pen tip without causing blurring or strikethrough in the drawn line.

Industrial Applicability

The pen tip of the present invention can be suitably applied as a pen tip used for marking type writing tools called an underline pens, paint markers, oil-based markers, and water-based markers.

Description of Reference Numerals

A     a pen tip
10    a retention body
20    a pen core
35    a front barrel
40    an ink storage body
50    a cap

**Claims**

1. A pen tip equipped with a pen core containing a concealing material, **characterized in that** the pen core has the lightness (L* value) of 80 or higher in the L*a*b* (CIELAB) color system.

2. The pen tip according to claim 1, wherein the concealing material is at least one selected from titanium oxide, zinc oxide, boron nitride, and barium sulfate, and has an average particle size of 50 to 1000 nm.

3. The pen tip according to claim 1 or 2, wherein the pen core is composed of a sintered core or a fiber bundle core, and the concealing material is fixed to the sintered core or the fiber bundle core.

4. A writing tool equipped with the pen tip according to any one of claims 1 to 3, **characterized in that** the writing tool is charged with a dye ink or a resin fine particle pigment ink containing a dye.

5. The writing tool according to claim 4, wherein the lightness (L* value) of the pen core impregnated with ink is 30 or higher.

6. The writing tool according to claim 4 or 5, wherein the color difference ΔE between the drawn line and the pen core is less than 40.

[FIG. 1]

(a)

(b)

[FIG. 2]

[FIG. 3]

[FIG. 4]

## INTERNATIONAL SEARCH REPORT

| International application No. |
|---|
| PCT/JP2019/031128 |

### A. CLASSIFICATION OF SUBJECT MATTER
Int.Cl. B43K1/12(2006.01)i, B43K8/02(2006.01)i, C09D11/16(2014.01)i

According to International Patent Classification (IPC) or to both national classification and IPC

### B. FIELDS SEARCHED

Minimum documentation searched (classification system followed by classification symbols)
Int.Cl. B43K1/12, B43K8/02, C09D11/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2003-11579 A (AUBEX CORPORATION) 15 January 2003, paragraph [0002] (Family: none) | 1-6 |
| Y | JP 10-140422 A (DAIWABO CO., LTD.) 26 May 1998, paragraphs [0015], [0030] (Family: none) | 1-6 |
| Y | WO 2013/099674 A1 (KAO CORP.) 04 July 2013, paragraph [0030] & RU 2552908 C1 & JP 2013-151774 A & CN 103946434 A | 1-6 |
| Y | JP 2005-306932 A (MITSUBISHI HEAVY INDUSTRIES, LTD.) 04 November 2005, paragraph [0016] (Family: none) | 1-6 |

☒ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 October 2019 (04.10.2019) | 15 October 2019 (15.10.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/031128

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-175730 A (MITSUBISHI PENCIL CO., LTD.) 06 July 2006, paragraphs [0007]-[0008], [0029], fig. 4 (Family: none) | 3-6 |
| Y | JP 2005-66893 A (MITSUBISHI PENCIL CO., LTD.) 17 March 2005, paragraphs [0001]-[0005], [0013] (Family: none) | 6 |
| A | WO 2007/116746 A1 (AUBEX CORPORATION) 18 October 2007, paragraphs [0027], [0032], [0040], fig. 1-4 & JP 2007-261056 A | 1-6 |
| A | US 2002/0141808 A1 (BRUNETTI, Bruee W.) 03 October 2002, paragraphs [0013]-[0015], fig. 2 & WO 2002/078977 A1 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000052682 A
- JP 8267982 A
- JP 2003011569 A